# EUROPEAN PATENT APPLICATION

(11) **EP 1 440 719 A1**
(43) Date of publication of application: **28.07.2004**
(21) Application number: 03075122.6
(22) Date of filing: 09.01.2003
(51) Int. Cl.: B01D 27/00, B01D 27/08, B01D 27/14, B01D 29/05, B01D 29/15, B01D 35/30

(54) **One way replacement filter and method therefor**

(71) Applicant: NTZ Nederland BV, 3047 BP Rotterdam (NL)
(72) Inventor: Schaerlaeckens, W., c/o NTZ Nederland BV, 3140 AA Maassluis (NL); Nieuwland, P., c/o NTZ Nederland BV, 3140 AA Maassluis (NL); Van Schie, Kornelis, NTZ Nederland BV, 3140 AA Maassluis (NL)

(57) **Abstract**

Method enabling the use of a one way replacement micro filter device as a replacement filter device for a conventional, solely full flow filter device, the device including a by pass filtering element and a full flow filtering element, and comprising a preferably cylindrical housing, having an oil inlet and an oil outlet, and preferably being set up for mounting in lieu of a conventional full flow filter device, the device being provided with an oil passage system (5, 14, 15, 18, 21, 6; 5, 14, 15, 16, 17, 18, 21, 6) for securing an immediate and full passage of an incoming oil flow through said full flow filter element, and for subsequently realising a flow of part of such incoming and primary filtered flow through said by pass filter by the incorporation of a venturi arrangement (18, 19, 20) know per se in said system via which the other part of primary filtered oil passes directly.

## Description

The present invention relates to a one way replacement micro filter device for incorporation in a conventional full flow arrangement, in particular for automotive application, and to a method enabling the design of such, as defined in the preamble of claim 1.

Micro filtering devises are generally know in the art, e.g. from patent publication PCT/NL00/00530 in the name of Applicant, which documents are here considered enclosed in the current description. It is a known commercial draw back of high efficiency micro filtration devices that these are to be incorporated in a hydraulic system according to a so-called by-pass arrangement, which may also be utilised for medium grade filtering arrangements. Such high efficiency micro-filtration devices are nevertheless also denoted by pass filter elements or, in the present context, in-body filter elements. High efficiency, cellulose fibre based micro filtration elements and its features is known from SAE paper 2001-01-0867 "Automatic transmission hydraulic system cleanliness - the effects of operating conditions, measurement techniques and high efficiency filters", which document is hereby regarded included. Rather than conventional filters which in fact rely on blocking particles through the provision of sufficiently small openings, and which therefore are surface based, cellulose fibre elements rely on electrostatic forces for binding particles while on their way through the filter material. For this reason micro filters rely on a relatively thick body of filtering material through which oil is to be passed, and within which the "filtering" effect takes place. At conventional filters on the other hand filtering takes place on the surface of the material, for which reason the latter is maximised by using folded paper or cardboard material. Consequently conventional filters have a relatively low resistance, allow a relative large flow and may in principle be cleaned by reversing a flow of medium through the filter. Micro filters may bind very small particles within its filtering body - are therefore here denoted in-body filters, but have a relatively large flow resistance and are not reusable by inverting flow of medium. Micro filters therefore always come in by pass configuration, whereas conventional filters may come in by pass configuration, in particular when in combined filter application one is of relatively coarse capacity, e.g. down to 60 micrometer, while the other has relatively smaller openings, causing a relative flow resistance, e.g. having openings of down to 30 micrometer.

Although such by pass arrangement has technically and scientifically been proven as a valid arrangement for optimal filtration of hydraulic oil, it appears in practice, that at present a good deal of technicians is pre-occupied with the idea that oil can only be safely filtered if all oil passes through a filter incorporated in a main line. Also it is regarded economically unattractive to adapt an existing machine or apparatus design such that a by-pass filtering is created separate from the full flow filter (alternatively denoted main stream filter).

Moreover, it is commonly impossible to incorporate micro filter elements, i.e. in-body filtering elements, in a main line, since such filters require a relatively high pressure difference in order to be functional. Many hydraulic main lines on the other hand, e.g. main lines for a automotive gearing system, are set up to allow a pressure fall over a required filter device of merely around one tenth of a Bar. This is well below what is required for a micro filter. However, with the present increasing application of low tolerances in engines and transmissions, desired for minimising losses, and in hydraulic control systems, desired for more accurate control, it is becoming a need to apply micro filtration, in particular since the sources of pollution of the oil, e.g. the clutch plates, are difficult to change into the direction of small particle pollution.

Thus, in order to allow the vast amount of present hydraulic designs in automotive systems to take advantage of the advantages of micro filters, it is thus a challenge and an object according to the invention to make the known by pass filter elements suitable for use in such existing hydraulic designs. Preferably such is realised in a manner closely matching the current practice of replacing clogged filters, thereby advantageously hooking into common practices, i.e. without a requirement of change of practice other than meeting a prescribed replacement interval of time and without the requirement of new equipment, nor of changing existing mentality at users and technicians. According to the invention such is realised by incorporating the features as defined in the characterising portion of claim 1.

With a novel device setting the method according to the main claim into practice, it is made possible to use a micro filtering device in a by-pass arrangement as if it were a full flow filter device. This is made possible by the use of a venturi arrangement for drawing fuel into the air inlet stream of an engine and operating in the same manner. The venturi arrangement is known per se from carburettors and is e.g. also described and illustrated by the 1983 edition of the "Dubbel" handbook (see P. 161). Via such such venturi arrangement in the filter device the pressure drop over the entire filter is kept identical to that of conventional full flow filters, however which internally creates a pressure drop over the micro filter sufficient for it to become operative, while still operating in the said so-called by pass mode.

The use of a venturi arrangement in a filtering device is known per se from so-called back flushable, relatively costly though re-usable filtering devices. An example is provided by patent publication EP-A1.1.08 456. This arrangement however is unsuitable for micro filters. The ultra high efficiency micro filter elements as preferred in the new filtering device, would in the known device subjected to the passage of "unfiltered oil". Unless frequent inspection is performed, this circumstance may seriously affect the functioning of the by pass filter, especially when the by pass filter element consists of a cellulose fibre based filter element, such that the costly presence of it may become superfluous by it becoming clogged through relatively large particles which at the surface of it, in time could block the oil passages though the micro-filter body, which latter may e.g. be cellulose fibre based.

In the present and new one-way replacement filter device, the oil flow system is arranged to pass the full flow, relatively course filter element before it may pass the by pass filter, thus securing the proper functioning of the latter over the time prescribed. In addition a cost effective venturi arrangement is realised by intelligent use of already present device parts such as the to be applied closure elements for of the device and the by pass filter element respectively. By the mere proper shaping of the two, these may together form the venturi arrangement. By this use of existing parts, which creates a radially oriented venturi flow, an extremely space effective device part is realised, which moreover is easily adaptable for use in different applications by the positioning of the axially moveable closure element of the by pass filter element.

As to the cost of the present device, no change of overall design of the engine, transmission or vehicle is required, whereas the housing of the filter may be kept virtually identical. Thus, extra costs for the present improvement merely lie in the relatively low cost additional parts, which apart from the micro filter include the relatively cheap springs, the closure elements and an adaptation in shape for realising the venturi arrangement.

The invention will now be elucidated further by way of example along a drawing in which:
Figure 1 is a schematic view of an axial cross section of a first embodiment of a filter device according to the invention;
Figure 2 is a corresponding view of a second embodiment.

In the figures, identical reference numbers relate to identical or at least comparable technical features.

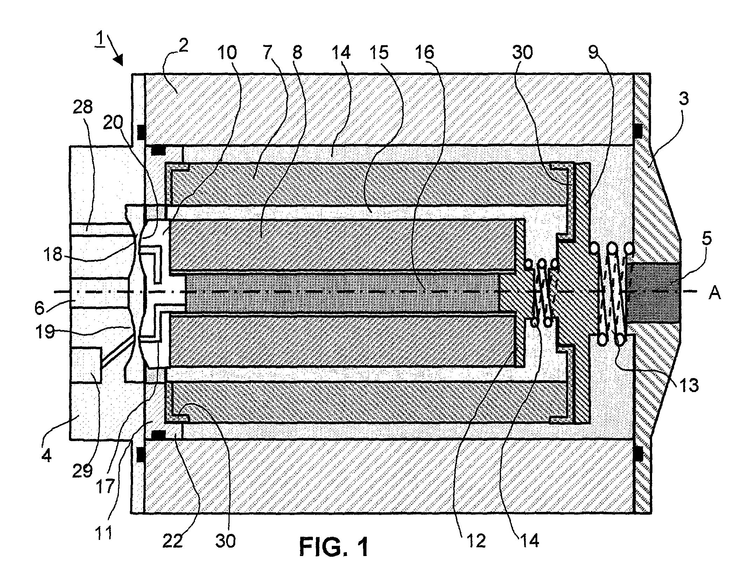

Figure 1 reflects an embodiment according to the invention in which both the by pass filter element 8 and the full flow filter element 7 are of a cellulose fiber based type of filter, which may be produced both in an extremely fine filtering grade and in a conventional, relative to the by pass filter, rough grade. Unlike conventional filter elements, which may e.g. comprise folded cardboard parts, there are no fixed axial end parts for closing the axial ends of a filter part to be replaced. Rather, the closure elements for such type of filters, due to the nature of the cellulose fibre body, are to come as a part of the filter device and are to be firmly pressed against said axial ends.

Figure 1 shows a cylindrical device housing 2, having axial end closure parts 3 and 4. The housing 2 comprises an oil inlet opening 5 and an oil outlet opening 6, which in the present example are both located aligned with the geometrical device axis A. Within the housing 2 there is comprised a full flow filter element 7 and a by pass filter element 8. The axial ends of these elements are closed by the end closure part 4 and a closure element 10 respectively. In the current embodiment an insert 11 is comprised between the filter element 7 and the housing part 4, so as to adapt for a specific length of the filter 7, and/or to accommodate for a radial positioning means via the presence of an edge 22.

The other axial end of each of the filters 7 and 8, i.e. at the side of inlet opening 5 is closed via separate end closure elements 9 and 12 respectively. The closure elements are firmly pressed against the axial ends of the respective filters 7 and 8 via the presence of a spring loaded means 13 and 14 present between housing part 3 and closure element 9, and between closure element 9 and closure element 12 respectively.

The generally cylindrically shaped by pass filter element 8 is located within the interior space of the generally cylindrically shaped full flow filter element 7. The inner wall of the latter and the outer wall of by pass filter 8 create an oil flow path 15 for oil filtered by full flow filter 7, entered thereto via inlet opening 5 and oil passage 14 communicating with the inlet. The filtered oil in passage 15 finds the filter element 8 to be more resistive to flow than the otherwise restricting passage 18 of a venturi arrangement, communicating on the one hand with passage 15 and leading to chamber 21 communicating with outlet opening 6 of the filter device 1. The venturi arrangement comprises a passage 18, advantageously composed in a manner known per se with spherically shaped portions 19 and 20 in the end closure parts 4 and 10 respectively.

The by pass filter 8 forms an otherwise closed inner chamber 16, which via passages 17 communicates with the oil passages 15, 18, 21. The passages 17 are created in the end closure element 10 and open towards the restriction of the passage 18, preferably at the most restrictive part thereof.

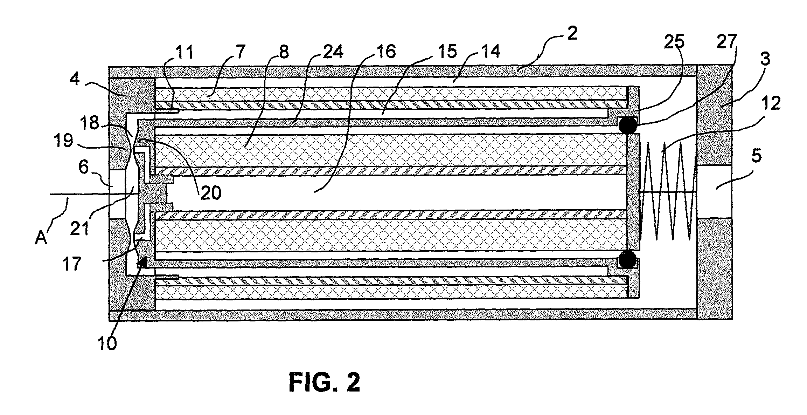

Figure 2 illustrates an embodiment suited for combination of an ultra high efficiency micro filter where a standard or conventional full flow filter 23 may be included in lieu of the full flow filter 7 in the embodiment according to figure 1. In this embodiment the full flow filter 23, 7 is positioned via a perforated inner wall 24, having an edged end part for radially and axially positioning the by pass filter element 23, 7. The wall being attached or forming a unit with the end closure element 10, both the full flow and by pass element 23 and 8 are urged against their respective end supports 4 and 10 via a spring element 14. Conventional filter units 23 unlike cellulose fibre based filter elements 7 not being compressible or expandable depending on the presence of fluid in the filter element 7, the by pass filter 7 is incorporated axially moveable within the perforated wall 24. In this example such is realised by an O-ring 27 located between the closure element 12 and the wall 24, closing off the inner chamber 16 for oil passage.

Apart from the advantage of having a high efficiency, fine grade filter combined within the package and functional requirements of a conventional filter, both embodiments come with the special advantages of a specially adapted radialy oriented venturi device, and of a by-pass filter being located within the interior space of the conventional full flow filter element. Also, both elements may easily be adapted for diffefferent filters by adapting the venturi nozzle 18 via an in the figures not represented, threaded distance member acting against the spring pressure of spring element 13 and/or 14. Such easy adaptation may in the current design also easily be obtained by fixed distance members, e.g. a perforated ring or a set of projections that are part of the end closure element 10, and which contact the venturi part in the end part 4. Such distance holders may be positioned within the centre or around the area of restriction 18. In a current version three axially threaded members are incorporated equally displaced.

In the preferred embodiment according to figure 1, the element 9 in combination with the spring 13 are favourable to easily accommodate a filter 7. The element 9 and the element 11 are here sealed or glued against the respective end closure elements 30 that automatical come with conventional filters. Not depicted is pressure relieve valve which may in this set up easily be provided in a bore in element 9, e.g. at the location of axis A. At the other axial end, a bore for accommodating a distance member is referred to by number 28. Further, an oil pressure sensor 29 may be included e.g., as depicted, communicating with the venturi arrangement, e.g. near the narrowest part thereof. Favourably the micro filter is slightly over dimensioned, so that when the full flow filter is clogged, the vehicle may still safely be driven for a while, while the user me be signalled to change filter. An oil pressure sensor may however, also be included centrally in the hydraulic system, and may notice a rise in line pressure up to the pressure where the pressure relief valve will come into action. Favourably the oil released by the pressure relieve valve enters into space 15, from where the operation of the device may be resumed, be it that the micro filter is now subjected to unfiltered oil and is now at risc of relative quick clogging until replacement of the filter is performed.

It is remarked that the venturi arrangement at the side of closure element 10 may according to the invention favourably be realised by a central insert which may enhance the forming of openings or ducts 17. Nevertheless, at mass production such closure element may cheaply be produced in die cast, or in a synthetic mould.

Functionally, the embodiments have a flow and pressure drop over the device according to the invention, which corresponds to that of conventional full flow filter devices. To this end the venturi, and the respective filter elements are dimensioned such that the overall pressure drop is no more than e.g. 0.1 Bar. The venturi restriction is dimensioned such that while the major part of the primary filtered oil of passage 15 passes directly via passage 18, a part of the primary filtered oil is sucked through the high efficiency micro filter element 8, due to the presence of passages 17, which create an under pressure over the by pass filter element 8 which is a few times that of the pressure drop over the entire device.

For example, a typical set up may be for a flow of about 20 litres per minute, with a main pressure drop of 0.1 bar from 2.1 Bar at oil entry 5 to 2.0 Bar at exit 6. A pressure drop over the by pass filter is then created of about 0.6 Bar, allowing for a by pass over micro filter 8 of about 1 litre per minute, i.e. about 5% of the entire flow. Depending on the filters used, energy losses in the device may alter these figures. The filter elements may vary in density of the cellulose fibre material and in its dimensions, i.e. length, diameter and thickness. All these parameters, including the setting of the venturi restriction depend on the specific requirements of a particular application for the filter device. Yet, the basic design of the device according to the invention includes all advantages of micro fu=filtration, in particular micro filtration based on cellulose fibres, which allow for ultra fine, high efficiency filtration. This means that the device according to the invention over somewhat longer but not undue period, will filter all of the oil of the system in which it is incorporated from micro particles, i.e. up to the lowest ISO classes, with a relative high beta values connected to such cellulose fibre filter, and with a very high capacity of taking up debris, also associated with such type of filter. Yet also, the device has the sole advantage of conventional main stream filters, i.e. to have a low pressure drop at a high flow of oil.

The invention, apart from the following claims, also relates to the preceding description and all details and aspects in the drawing, which are directly and unambiguously derivable there from, at least by a man skilled in the art.

## Claims

1. Method enabling the use of a one way replacement micro filter device (1) as a replacement filter device for a conventional, solely full flow filter device, in particular suited for automotive application, the device including a by pass filtering element (8) and a full flow filtering element (7), and comprising a preferably cylindrical housing (4), having an oil inlet (5) and an oil outlet (6), and preferably being set up for mounting in lieu of a conventional full flow filter device, the device being provided with an oil passage system (5, 14, 15, 18, 21, 6; 5, 14, 15, 16, 17, 18, 21, 6) for securing an immediate and full passage of an incoming oil flow through said full flow filter element (7), and for subsequently realising a flow of part of such incoming and primary filtered flow through said by pass filter (8) by the incorporation of a venturi arrangement (18) know per se in said system, via which the other part of primary filtered oil passes directly.

2. Method according to the preceding claim, in which the full flow filter element (7) and the by pass filter element (8) are provided nested, in particular in which the by pass filter element (8) is incorporated in the inside chamber (15) of the full flow filter element (7).

3. Method according to any of the previous claims in which the system (5, 14, 15, 18, 21, 6; 5, 14, 15, 16, 17, 18, 21, 6) is provided with a centralised discharge (18, 21) for full flow filtered oil in which centralised discharge said venturi arrangement (18, 19, 20) is incorporated, and to which the otherwise axially closed inner chamber (16) of the by pass filter element (8) discharges via separate openings (17) completing said venturi arrangement (18, 19, 20) known per se.

4. Method according to any of the previous claims in which the central discharge (18, 21) including said venturi arrangement (18, 19, 20) is included near an axial end (10) of said by pass filter element (8), preferably axially outside both said full flow and said by pass filter element.

5. Method according to any of the previous claims in which the pressure fall over the venturi arrangement (18, 19, 20) is set up capable of adapting a hydraulic pressure drop over the same by the magnitude of opening (18) of the central discharge being adaptable through an axial displacement of constituting parts (4, 19, 10, 20).

6. Method according to any of the previous claims in which the magnitude of the central discharge opening (18) is axially adaptable against a spring element force (13, 14).

7. Micro filter device (1), in particular suited for automotive application, set up according to a method according to any of the previous claims.

8. Filter device according to the previous claim, **characterised in that** the housing (2, 3, 4) of the device comprises an inner, preferably cylindrically shaped housing (24) supporting both the full flow filter element (7) and the by pass filter element (8).

9. Filter device according to any of the previous claims **characterised in that** the inner housing (24) is positioned within the main housing (2, 3, 4) via a spring loaded element (13, 14) acting in the axial direction.

10. Filter device according to of the preceding claim, **characterised in that** the spring load is inserted on the inner housing (24) via the by pass filter (8) which is accommodated axially free at one axial end (5, 25) relative to the inner housing (24).

11. Filter device according to any of the preceding claims, **characterised in that** the housing (2, 3, 4) is accommodated with an entry opening (5) at one axial end and an exit opening (6) at the other axial end.

12. Filter device according to any of the preceding claims, **characterised in that** the full flow filtering element (7) is an outside surface based filter element, and the by pass filtering element (8) is produced as an in-body, in particular cellulose fibre based filter element, which may be included in distinguishing axial lengths, radial thickness, diameter and density (specific mass).

13. Filter device according to any of the preceding claims, **characterised in that** each filter element (7, 8) is at the side opposing the centralised discharge (18) provided with separate end closure elements (9, 12) for each filter device, one being an inner closure element (12), separated from the outer closure element (9) and/or the relevant housing closure part via a spring loaded element (13).

14. Filter device according to any of the preceding claims, **characterised in that** the centralised discharge opening (18), is incorporated in the device in a manner allowing an axial adaptation in width, i.e. transverse to the main stream therethrough.
